Europäisches Patentamt

European Patent Office

Office européen des brevets

(11) Veröffentlichungsnummer: **0 180 036**
**A2**

(12) # EUROPÄISCHE PATENTANMELDUNG

(21) Anmeldenummer: **85112169.9**

(22) Anmeldetag: **25.09.85**

(51) Int. Cl.⁴: **A 23 G 3/20**

(30) Priorität: **02.11.84 DE 3440011**

(43) Veröffentlichungstag der Anmeldung: **07.05.86**
Patentblatt 86/19

(84) Benannte Vertragsstaaten: **BE CH FR GB LI NL**

(71) Anmelder: **Lothar A. Wolf Spezialmaschinen-GmbH, Uferstrasse 20, D-4902 Bad Salzuflen 1 (DE)**

(72) Erfinder: **Wolf, Lothar, Ostersiek 11, D-4902 Bad Salzuflen 1 (DE)**

(74) Vertreter: **Loesenbeck, Karl-Otto, Dipl.-Ing. et al, Jöllenbecker Strasse 164, D-4800 Bielefeld 1 (DE)**

(54) **Maschine zur Herstellung von Mandelsplitter-Häufchen.**

(57) Bei dieser Maschine zur Herstellung von Mandelsplitter-Häufchen sind nebeneinanderliegende Rinnenzüge (1) vorgesehen, die jeweils in Aufeinanderfolge aus einer Mischrinne (2), einer Siebrinne (3) und einer Absetzrinne (4) gebildet sind. Ein den Rinnen gemeinsamer Mehrfachschieber (10) mit einer Vielzahl von einzelnen Schiebern (11) bewegt die sich bildenden Mandelsplitter-Häufchen nach und nach taktweise unter Durchmischung und Absiebung durch die Rinnenzüge (1).

Firma
Lothar A. Wolf
Spezialmaschinen

Uferstraße 20

4902 Bad Salzuflen


Maschine zur Herstellung von Mandelsplitter-Häufchen


Die Erfindung betrifft eine Maschine zur Herstellung von Mandelsplitter-Häufchen gemäß Gattungsbegriff des Patentanspruches 1.

Bei einer bekannten Maschine der gattungsgemäßen Art (DE-OS 29 10 379) ist eine Förderstrecke aus einem Endloskettenförderer gebildet, die in Mitnehmerplatten eine Mehrzahl nebeneinander angeordneter Siebgehäuse tragen. Zu Beginn der Förderstrecke befinden sich in Aufeinanderfolge ein erstes Schokoladendosiergerät, ein Mandelsplitterdosiergerät sowie ein zweites Schokoladendosiergerät, so daß zunächst eine Schokoladenlage in die Siebkörper eingegeben wird, darauf dosiert Mandelsplitter gegeben werden und schließlich ein dosierter Schokoladenüberguß erfolgt. Es wird hier ein Schokoladenübermaß zugegeben, das bei Durchlauf der Siebgehäuse durch eine nachgeordnete Rütteleinrichtung abgesiebt wird. Auf diese Weise lassen sich bezüglich des Schokoladen- und Mandelsplitteranteiles exakt bemessene Mandel-splitter-Häufchen ohne Bruchgefahr für die empfindlichen Mandelsplitter herstellen. Im Hinblick auf die Vielzahl der Mitnehmerplatten jeweils mit mehreren nebeneinanderliegenden Siebgehäusen hat diese Maschine jedoch einen relativ komplizierten Aufbau und sie ist in ihrem Leistungsvermögen auch nur begrenzt steigerungsfähig, weil man bei diesem Fördersystem recht schnell an eine vertretbare Obergrenze des realisierbaren Fördertaktes gelangt und aus baulichen Gründen auch die Breite der Mitnehmer zwischen den beiden Kettensträngen und damit die Anzahl der nebeneinander anzuordnenden

Wolf

Siebgehäuse eines Mitnehmers begrenzt ist. Zum baulich relativ komplizierten Aufbau trägt auch bei, daß für jedes Siebgehäuse praktisch ein Auswerfer vorgesehen sein muß.

Der vorliegenden Erfindung liegt von daher die Aufgabe zugrunde, eine Maschine der gattungsgemäßen Art zu schaffen, die sich unter Beibehalt der hohen Qualität der hergestellten Häufchen durch einen vereinfachten konstruktiven Aufbau in Verbindung mit einem großen Leistungsvermögen auszeichnet.

Die erfindungsgemäße Lösung ergibt sich aus dem kennzeichnenden Teil des Patentanspruches 1.

Die nunmehr zum Einsatz kommenden Rinnenzüge bestehen aus einfach herzustellenden Formteilen, beispielsweise aus Blech. Auch der Mehrfachschieber besteht dem Grundprinzip nach aus einem einfachen Rahmen mit wiederum einfachen Schiebern in Form von an die Rinnenquerschnitte angepaßten Formteilen. Schließlich ist auch die Pilgerschrittbewegung dieses Mehrfachschiebers getriebetechnisch mit relativ einfachen Mitteln zu verwirklichen. Hervorzuheben ist dabei auch, daß zumindest vom Bauprinzip her im Grunde genommen im Bedarfsfall sehr viele Rinnenzüge nebeneinander zum Einsatz kommen können und der Mehrfachschieber problemlos auch entsprechend breit mit einer Vielzahl von einzelnen Schiebern ausgestaltet werden kann, so daß eine solche Maschine schon von daher auf eine hohe Leistung ausgelegt werden kann.

Es hat sich ferner überraschenderweise gezeigt, daß das taktweise Hindurchbewegen der dosierten Schokoladen-Mandelsplittermenge vom Beginn der Mischrinne an durch diese hindurch mit jeweils den aufeinanderfolgenden einzelnen Schiebern nicht nur zu einem guten und auch die Mandelsplitter schonenden Vermischen von Schokolade und Mandelsplittern führt, sondern daß dieses im Takt auch relativ schnell geschehen kann, so daß auch von daher ein hohes Leistungs-. vermögen gegeben ist. Dies gilt auch durch die taktweise Hindurch-

bewegung der Häufchen durch die nachfolgende Siebrinne, durch deren vibratorische Rüttelbewegung der zunächst vorgesehene Schokoladenüberschuß wieder abgesiebt wird. Die Absetzrinne dient dabei in erster Linie der Überbrückung des erforderlichen Abstandes zwischen dem Auffanggefäß unter der Siebrinne sowie einem nachgeordneten Transportmittel, beispielsweise einem durch einen Kühlkanal laufenden Förderer.

Zum vereinfachten konstruktiven Aufbau trägt auch bei, daß bei der hier betroffenen Maschine nur noch eine Schokoladendosiereinrichtung erforderlich ist.

Es hat sich gezeigt, daß im Verhältnis zu der vorstehend beschriebenen bekannten Maschine die Taktgeschwindigkeit der Häufchenherstellung unter Beibehalt der Qualität der Mandelsplitter bezüglich genauer Dosierung von Schokolade und Mandelsplittern, deren innige Vermischung sowie bezüglich des Mandelsplitterbruches beinah verdoppeln läßt. Hinzu kommt, daß im Bedarfsfall vom Bauprinzip der Maschine her auch mehr Mandelsplitter-Häufchen gleichzeitig nebeneinander entsprechend einer entsprechenden Anzahl von Rinnenzügen nebeneinander hegestellt werden können.

Weitere bevorzugte Ausgestaltungen einer derartigen Maschine sind in den Unteransprüchen gekennzeichnet. Hervorzuheben ist hier die besondere Ausgestaltung des Absetzers, die Beheizung des Absetzers sowie eine besondere Abstreifvorrichtung für die einzelnen Schieber des Mehrfachschiebers.

Ein bevorzugtes Ausführungsbeispiel einer derartigen Maschine zur Herstellung von Mandelsplitter-Häufchen wird nachstehend unter Bezugnahme auf die Zeichnung näher beschrieben.

Wolf

Es zeigen

Figur 1 eine Schemadarstellung einer Maschine gemäß der Erfindung in Seitenansicht,

Figur 2 das Bewegungsschema des Mehrfachschiebers der Maschine nach Figur 1,

Figur 3 eine vereinfachte Perspektive der Rinnenzüge mit zugeordnetem Mehrfachschieber der Maschine nach Figur 1.

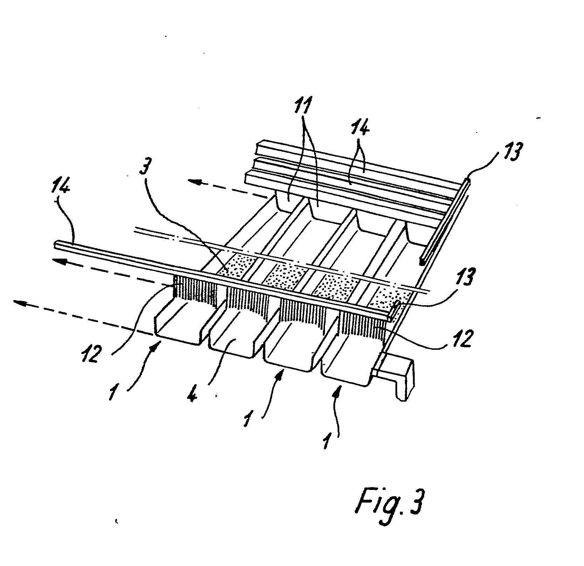

Die Maschine zur Herstellung von Mandelsplitter-Häufchen weist eine Mehrzahl von nebeneinandergeordneten Rinnenzügen 1 auf, wie in Figur 3 angedeutet. Jeder einzelne dieser Rinnenzüge 1 ist aus drei unterschiedlichen Abschnitten zusammengesetzt, und zwar, beginnend mit der Eingabe des Materiales, jeweils aus einer Mischrinne 2, einer Siebrinne 3 und schließlich einer Absetzrinne 4. Die Rinnen haben alle im wesentlichen den gleichen Grundquerschnitt. In der Mischrinne 3 eines jeden Rinnenzuges erfolgt das noch näher zu beschreibende Vermischen von Schokoladenmasse und Mandelsplittern. Es wird dabei bei der Materialeingabe mit einem Überschuß von Schokolade gearbeitet. Jeweils in der Mischrinne 3 wird der Schokoladenüberschuß bis hin zur exakten Dosierung der gewünschten Schokoladenmenge eines Häufchens abgesiebt. Die Siebrinne 3 hat von daher einen siebartig gelochten Rinnenboden 5 und es ist ihr ferner ein Vibrationsantrieb üblicher Bauart (nicht dargestellt) zugeordnet. Unterhalb der Siebrinnen 3 der Rinnenzüge 1 befindet sich ein Auffangbehälter 6 für die abgesiebte Schokolade.

Der erforderliche Raum zwischen dem betroffenen Ende des Auffangbehälters 6 und einem abführenden Förderer 7, der beispielsweise anschließend durch einen Kühlkanal geführt sein kann, ist durch die Absetzrinne 4 überbrückt. Der Förderer 7 ist zweckmäßig so

Wolf

breit gehalten, daß er alle abgesetzten Häufchen        aller Rinnenzüge 1 aufnimmt.

Die Anfangszonen der Mischrinnen 2 der Rinnenzüge 1 dienen als Dosierzonen 2a. Hier münden einerseits die Auslässe 8 einer Schokoladendosiereinrichtung (nicht dargestellt), die beispielsweise im wesentlichen aus einem Vorratsbehälter mit nachgeordneter Dosier-Kolbenpumpe zur Beschickung der Auslässe 8, die in einer Anzahl entsprechend der Anzahl der Rinnenzüge 1 vorgesehen sind, bestehen kann.

Ferner münden von oben her in den Dosierzonen 2a Zuführungsrinnen 9,
die von einer Mandelsplitterdosiereinrichtung (nicht dargestellt)
kommen. Eine solche Mandelsplitterdosiereinrichtung kann beispielsweise aus einem Vorratsbehälter mit nachgeordneter Dosiertrommel
üblichen Aufbaus bestehen.

Zum Transport der sich bildenden    Häufchen    durch die Rinnenzüge 1 sowie zur Vermischung der Schokolade und der Splitter in
den Mischrinnen 2 ist ein in einem speziellen Bewegungsablauf
angetriebener Mehrfachschieber 10 vorgesehen. Dieser Mehrfachschieber
10 beinhaltet für jeden Rinnenzug 1 eine in Förderrichtung der sich
bildenden Häufchen    gesehen sich erstreckende Folge von in einem
vorbestimmten Abstand voneinander angeordneten, einzelnen Schiebern 11,
wobei im dargestellten Ausführungsbeispiel am Ende der Aufeinanderfolge für jeden Rinnenzug ein noch im einzelnen zu beschreibender
Absetzer 12 den Abschluß bildet.

Im einzelnen beinhaltet der Mehrfachschieber einen Tragrahmen 13, an
dem sich eine Mehrzahl von Querträgern 14 befindet, an denen
wiederum sowohl in der genannten abständigen Aufeinanderfolge pro
Rinnenzug wie in entsprechender Nebeneinanderanordnung entsprechend
der Anzahl der Rinnenzüge 1 die Schieber 11 befestigt sind. Die
Schieber 11 haben dabei eine Außenkontur, die der Querschnittsform
der Rinnen 2, 3, 4 gut angepaßt ist, so daß sie bei ihrem Lauf durch

Wolf

die Rinnen diese weitestgehend ausfüllen. Für diesen Einsatzzweck haben sich entsprechend geformte Teflonplatten als besonders zweckmäßig erwiesen.

Die an dem einen Ende der Schieberanordnung für jeden Rinnenzug vorgesehenen Absetzer 12 sind vorzugseise als metallische Absetzrechen ausgebildet, wobei diesen Absetzrechen 12 eine Heizung (nicht dargestellt) zugeordnet ist.

Der über den Rinnenzügen 1 angeordnete Mehrfachschieber 10 ist Pilgerschrittartig durch die Rinnenzüge 1 bewegbar, mit einem Arbeitsvorschub bei in die Rinnenzüge 1 abgesenkten Schiebern 11 und Absetzern 12, einer von den Rinnen nach oben fortführenden Abhebebewegung, einer an den Ausgangspunkt rückführenden Rücklaufbewegung sowie einer Absenkbewegung mit Absenkung der Schieber 11 in die Rinnenzüge 1 hinein. Diese Bewegungsfolge kann durch gängige, nicht dargestellte Antriebsmittel erreicht werden. So können für den Mehrfachschieber 10 entweder rein pneumatische Vorschub-Rücklauf-Anhebe- und Absenkbewegungen über entsprechende Kolbenaggragate vorgesehen werden. Es ist auch möglich, die genannte Bewegungsfolge durch Kurvensteuerungen zu erreichen, wobei zweckmäßig von der Hauptmaschinenwelle aus im Takt getriebene Steuerkurven für die einzelnen Bewegungsabschnitte vorgesehen sind, die über an dem Tragrahmen 13 vorgesehene Kurvenrollen auf den Tragrahmen übertragen werden.

Einzelheiten und Besonderheiten des Bewegungstaktes ergeben sich aus der nachfolgenden zusammenfassenden Beschreibung der Herstellung einer Gruppe von Mandelsplitter-Häufchen.

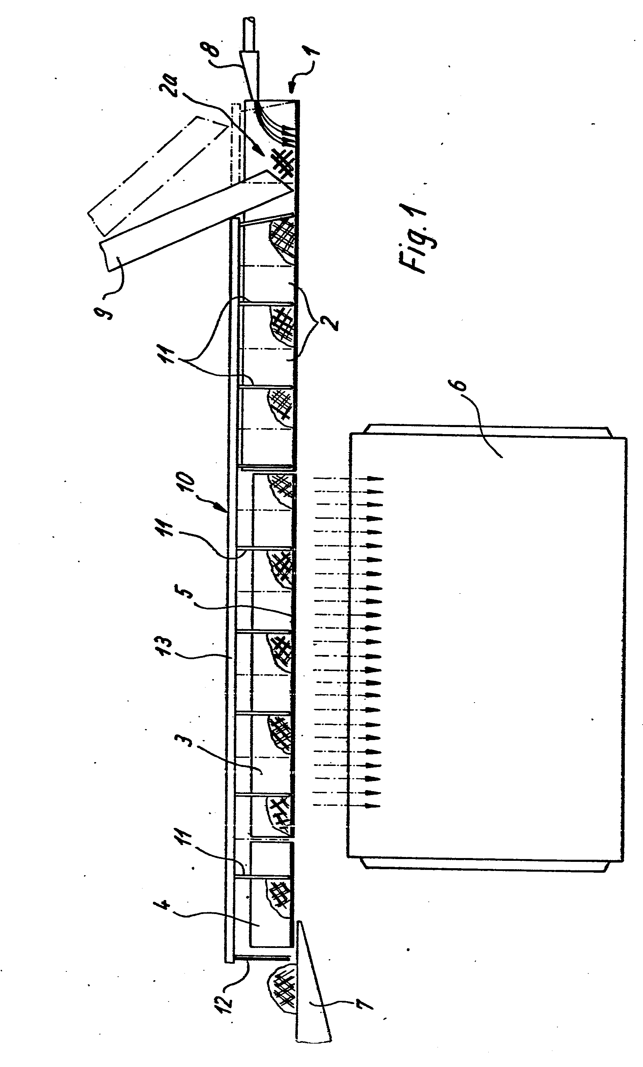

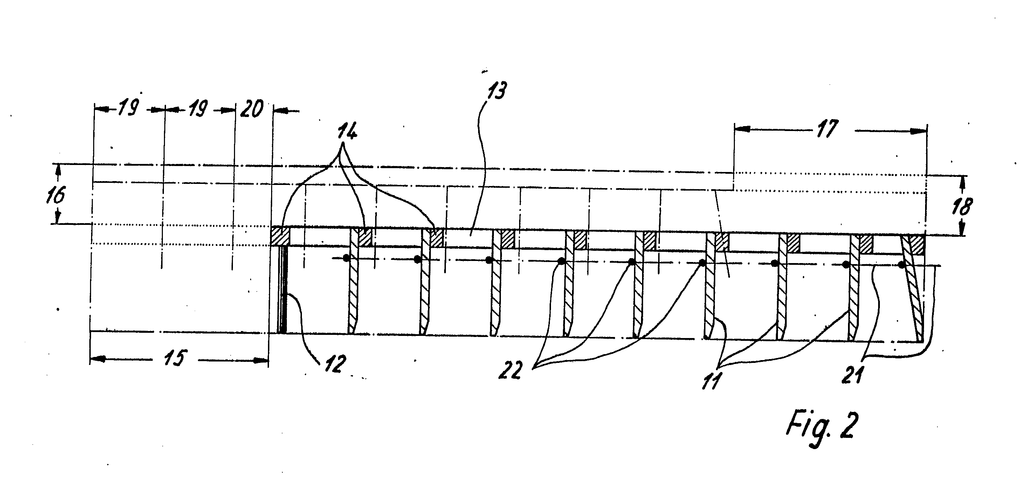

Wenn sich, wie in Figur 2 illustriert, der Mehrfachschieber 10 am Ende seiner vorgesehenen Vorlaufstrecke 15 und am oberen Ende seiner Anlaufstrecke 16 befindet, erfolgt die in Figur 1 illustrierte Materialeingabe in die Dosierzone 2a einer jeden Mischrinne 2 der nebeneinanderliegenden

Wolf

Rinnenzüge 1. Es werden hier jetzt jeweils die für die Herstellung der Häufchen erforderlichen Mandelstücke eingegeben, sowie Schokolade in einem vorbestimmten Übermaß eingebracht. Der Mehrfachschieber 10 bewegt sich um die Rücklaufstrecke 17 zurück, durchläuft seine Absenkstrecke 18, so daß die im dargestellten Ausführungsbeispiel vorgesehenen neun abständig voneinander angeordnete Schieber 11 pro Rinnenzug sowie der Absetzer 12, der für jeden Rinnenzug vorgesehen ist, sich in den Rinnen befinden. Der Mehrfachschiebr 10 durchläuft nunmehr seine Vorlaufstrecke 15 und fördert dabei das dosierte Material um einen Arbeitstakt weiter, wobei das taktweise Hindurchschieben des dosierten Gutes durch die Mischrinnen 2 mittels der Schieber 11 zu einer guten Durchmischung der Mandelstücke und der Schokolade mit einer guten allseitigen Umhüllung der Mandelstücke durch die Schokolade führt.

Es ist an dieser Stelle hervorzuheben, daß die Rücklaufstrecke 17, und damit naturgemäß die gleich große Vorlaufstrecke 15, so bemessen sind, daß sie einer oder dem Doppelten einer Teilung 19 der Schieber 11 zuzüglich einer Sicherheitsstrecke 20 entsprechen, wie in Figur 2 illustriert. Die Sicherheitsstrecke 20 gewährleistet, daß jeweils bei der nächsten Absenkung der Schieber 11 beim nächsten Arbeitstakt nicht etwa die sich absenkenden Schieber 11 die sich in der Bildung befindlichen Häufchen zerstören, sondern räumlich abständig hinter diesen wieder in die Rinnen 2, 3 und 4 eintreten.

Auf die vorstehend geschilderte Weise werden die sich bildenden Häufchen zunächst unter entsprechender Mischung durch die Mischrinnen 2 getaktet und sie werden dann jeweils von den aufeinanderfolgenden Schiebern 11 durch die Siebrinnen 3 getaktet, in denen der Schokoladenüberschuß abgesiebt wird. Danach werden die Häufchen dann durch die Absetzrinnen getaktet und schließlich aus diesen mittels der Absetzrechen 12 abgesetzt.

Wolf

Aus Vorstehendem ergibt sich, daß die Produktion der Häufchen kontinuierlich in dem Sinne erfolgt, daß bei jedem Arbeitstakt dosiert, unter Mischung in der Mischrinne 2 gefördert, abgesiebt und abgesetzt wird.

Die Ausgestaltung der Absetzer 12 in Form von Absetzrechen aus einzelnen Metallstäben hat den Vorzug, daß diese Metallstäbe in einfacher Weise sowohl beheizt, wie auch in einer gewünschten jeweils vorgegebenen Form zueinander angeordnet werden können. So ist beispielsweise die Anordnung der einzelnen Stäbe eines Absetzrechens 12 in einer Bogenform zweckmäßig, da hierdurch beim Absetzen noch formend zur Erzielung der normalerweise gewünschten Rundform auf die abzusetzenden Häufchen eingewirkt werden kann. Die Beheizung der Absetzrechen gewährleistet dabei, daß die abzusetzenden Häufchen nicht am Absetzrechen, auch nicht tendenziell, haften bleiben, sondern gut von ihm abgleiten. In zweckmäßiger Ausgestaltung ist dabei das Ende der Absetzrinnen 4 wenige mm oberhalb des Anfangsbereiches des abführenden Förderers 7 angeordnet, so daß von daher nach einer kleinen Abkippbewegung die abzusetzenden Häufchen von dem Förderer 7 quasi aus dem Ende der Absetzrinnen 4 und von den Absetzrechen 12 fortgezogen werden.

Da nicht auszuschließen ist, daß sich selbst an den aus Teflon bestehenden Schiebern 11 im Laufe der Zeit doch etwas Schokoladenmasse festsetzen könnte, ist zur Verhinderung eines größeren Schokoladenaufbaues an den Schiebern 11 eine Abstreifeinrichtung vorgesehen. Hierzu ist ein zusammen mit dem Tragrahmen 13 des Mehrfachschiebers 10 abgefedert verlagerbarer, im übrigen durch Führungen jedoch unanhebbar und unabsenkbar gehaltener Rahmen (nicht dargestellt) vorgesehen, in dem quer jeweils zu den parallel zueinander liegenden Schiebern 11 der einzelnen Rinnenzüge 1 Abstreifdrähte 22 für diese parallel nebeneinanderliegende Gruppe von Schiebern 11 gespannt sind. Die Abstreifdrähte 22 liegen auf diese Weise in einer horizontalen Mittelebene 21, die im Niveau etwa des unteren Endes der Schieber 11, wenn diese sich in der angehobenen Stellung befinden, liegt. Da die Abstreif-

Wolf

drähte 22 bei Mitlauf mit dem Mehrfachschieber 10 im übrigen und bei entsprechender Abfederung demgegenüber in dieser horizontalen Mittelebene 21 gehalten werden, kommt es bei jedem Anheben und Absenken der Schieber 11 zu einem Abstreifen etwa anhaftender Schokolade und Mandelteile durch die entsprechenden Abstreifdrähte 22.

Abweichend vom vorstehend beschriebenen Ausführungsbeispiel ist es möglich, auch schon einige der in der Aufeinanderfolge der Schieber 11 hinten liegende, den Absetzern 12 benachbart liegende Schieber in Form von Rechen auszugestalten, um eine zusätzliche bessere Formungsmöglichkeit für die in der letzten Phase ihrer Bildung befindlichen Mandelsplitter zu haben.

Ferner kann gerade auch der Bereich der Absetzrinne 4 dazu genutzt werden, weitere, zusätzliche Formungselemente auf die hier ankommenden Häufchen einwirken zu lassen. So kann beispielsweise daran gedacht werden, die Übergabe von der Absetzrinne 4 auf den nachfolgenden Förderer 7 durch eine Transporteinrichtung vornehmen zu lassen, die zugleich als Formgebungsteil ausgestaltet ist.

Firma
Lothar Wolff
Spezialmaschinen

Uferstraße 20

4902 Bad Salzuflen

Patentansprüche

1. Maschine zur Herstellung von Mandelsplitter-Häufchen, mit einer Mandelstückdosiereinrichtung, einer Schokoladendosiereinrichtung, einer
Misch- und Transporteinrichtung und einer vibratorisch beaufschlagbaren Absiebeinrichtung für einen Schokoladenüberschuß,
d a d u r c h   g e k e n n z e i c h n e t, daß nebeneinanderliegend Rinnenzüge (1) jeweils in Aufeinanderfolge aus einer
Mischrinne (2), einer Siebrinne (3) und einer Absetzrinne (4)
gebildet sind und den Rinnen ein Mehrfachschieber (10) zugeordnet ist, der für jeden Rinnenzug (1) aus einer Mehrzahl abständig hintereinander angeordneter Schieber(11), die in ihrer
Form den Rinnenquerschnitten angepaßt sind, sowie abschließend
einem Absetzer (12) besteht, wobei der Mehrfachschieber (10)
für den taktweisen Durchlauf einer dem Arbeitshub entsprechenden
Vorlaufstrecke (15), einer Anhebestrecke (16), einer Rücklaufstrecke (17) und einer Absenkstrecke (18) geführt und angetrieben ist derart, daß die sich bildenden Mandelsplitter taktweise
von den pro Rinnenzug (1) aufeinanderfolgenden Schiebern (11)
unter Durchmischung durch die Mischrinne (2), durch die vibratorisch bewegte Siebrinne (3) sowie nachfolgend durch die
Absetzrinne (4) und schließlich mittels des Absetzers (12) aus
dieser heraus bewegbar sind.

Wolf

2. Maschine nach Anspruch 1, dadurch gekennzeichnet, daß in den Anfangsbereichen der Mischrinnen (2) der Rinnenzüge (1) Dosierzonen (2a) gebildet sind, in die einersetis die Auslässe (8) einer Schokoladendosiereinrichtung sowie die Zuführungsrinnen (9) einer Mandelstückdosiereinrichtung münden.

3. Maschine nach Anspruch 1, dadurch gekennzeichnet, daß die Absetzer (12) als beheizbare Absetzrechen ausgebildet sind.

4. Maschine nach Anspruch 3, dadurch gekennzeichnet, daß die einzelnen Stäbe der Absetzrechen (12) in ihrer Aufeinanderfolge eine vorbestimmte Formgebungskontur bilden.

5. Maschine nach Anspruch 1, dadurch gekennzeichnet, daß die Absetzrinnen (4) mit ihren Abgabeenden geringfügig oberhalb eines abführenden Förderers (7) enden.

6. Maschine nach Anspruch 1, dadurch gekennzeichnet, daß im Bereich der Absetzrinnen (4) zusätzliche Formgebungseinrichtungen für die Mandelsplitter vorgesehen sind.

7. Maschine nach Anspruch 1, dadurch gekennzeichnet, daß die Schieber (11) des Mehrfachschiebers (10) aus Teflonplatten gebildet sind.

8. Maschine nach Anspruch 1, dadurch gekennzeichnet, daß die Rücklaufstrecke (17) für den Mehrfachschieber (10) der Teilung (19) der Schieber (11) für einen Rinnenzug (1), oder einem ganzzahligen Mehrfachen dieser Teilung (19), zuzüglich einer Sicherheitsstrecke (20) entspricht.

Wolf

0180036

9. Maschine nach Anspruch 1, dadurch gekennzeichnet, daß den Schiebern (11) des Mehrfachschiebers (10) eine Abstreifeinrichtung (22) zugeordnet ist.

10. Maschine nach Anspruch 9, dadurch gekennzeichnet, daß die Abstreifeinrichtung einen gegenüber dem Mehrfachschieber (10) abgefedert mitlaufenden, durch Führungen in einer horizontalen Mittelebene (21) etwa in halber Höhe der Anhebestrecke (16) bzw. der Absenkstrecke (18) gehaltenen Rahmen beinhaltet, in dem gemeinsam für die Gruppen der entsprechend der Anzahl der Rinnenzüge (1) nebeneinander angeordneten Schieber (11) querverlaufende Abstreifdrähte (22) gespannt sind.

0180036

Fig.1

Wolf

Fig. 2

0180036

*Fig. 3*